# EUROPEAN PATENT APPLICATION

(11) **EP 1 717 115 A2**
(43) Date of publication of application: **02.11.2006**
(21) Application number: 06003930.2
(22) Date of filing: 27.02.2006
(51) Int. Cl.: B60R 22/46

(54) **Seatbelt retractor and seatbelt device equipped with the same**

(30) Priority: 27.04.2005 JP 2005129781; 13.06.2005 JP 2005172114
(71) Applicant: TAKATA CORPORATION, Minato-ku, Tokyo 106-8510 (JP)
(72) Inventor: Kosugi, Noriyuki, Minato-ku Tokyo 106-8510 (JP); Hiramatsu, Koji, Minato-ku Tokyo 106-8510 (JP); Shiotani, Masahiro, Minato-ku Tokyo 106-8510 (JP); Kanamori, Yasushi, Minato-ku Tokyo 106-8510 (JP); Miwa, Morimoto, Minato-ku Tokyo 106-8510 (JP)
(74) Representative: Banzer, Hans-Jörg

(57) **Abstract**

In order to achieve a good restraining capability for a vehicle occupant by reducing a rotational angle of a spool (4) in a belt-withdrawing direction to the utmost extent to a point at which the spool (4) becomes locked under an emergency situation, and to reduce the decline of seatbelt (3) load in EA operation, in an emergency situation, a pretensioner (11) is activated so that the spool (4) and a locking base (23) are quickly rotated together in a belt-retracting direction. Subsequently, a stopper (33) is guided along a guide groove (34) so as to move or rotate counterclockwise relatively with respect to the locking base (23), thereby reaching an active position. Accordingly, the stopper (33) is released from a latching claw (31a), and a quick-lock pawl (31) is rotated clockwise with a biasing force of a spring (32), whereby the latching claw (31a) becomes engaged to internal teeth (27). Thus, the locking base (23) becomes locked so that the locking base (23) is held back from rotating in the belt-withdrawing direction, and the EA operation by the torsion bar (7) is quickly performed.

## Description

The present invention relates to a seatbelt device which is installed in a vehicle, such as an automobile, and includes a seatbelt retractor that prevents a spool from rotating in a belt-withdrawing direction in case of an emergency situation where large deceleration of the vehicle occurs due to, for example, a collision. This prevents a seatbelt from being withdrawn, thereby restraining and protecting a vehicle occupant. In particular, the present invention relates to a seatbelt retractor which is equipped with a pretensioner that rotates the spool in a belt-retracting direction in an initial stage of the emergency situation so as to increase the restraining force applied to the vehicle occupant from the seatbelt.

### Background Art

Conventional seatbelt devices provided in vehicles, such as automobiles, restrain a vehicle occupant with a seatbelt in an emergency situation in order to prevent and protect the vehicle occupant from being moved inertially from a seat. Such seatbelt devices are equipped with a seatbelt retractor. The seatbelt retractor retracts and withdraws the seatbelt with a spool, and is provided with a lock mechanism for locking the spool in an emergency situation so as to hold back the spool from rotating in the belt-withdrawing direction. Thus, the seatbelt is prevented from being withdrawn under an emergency situation.

A conventional example of such a seatbelt retractor (for example, see Japanese Unexamined Patent Application Publication No. 2001-58559) is equipped with at least a pretensioner which rotates the spool in the belt-retracting direction in an initial stage of an emergency situation so as to increase the restraining force applied to the vehicle occupant from the seatbelt.

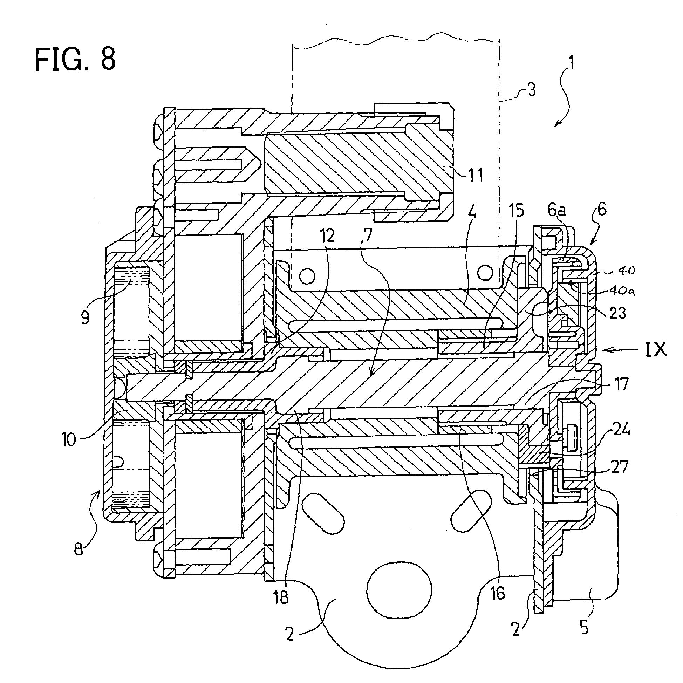

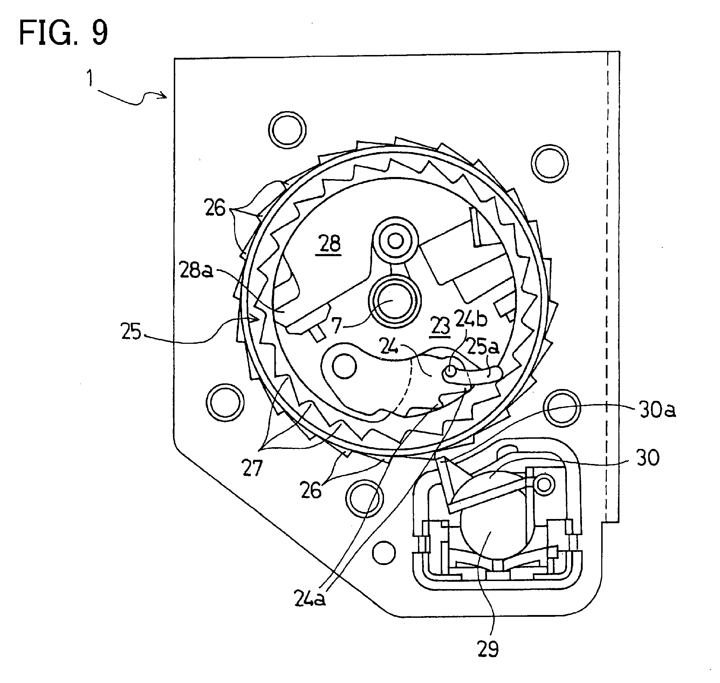

Fig. 8 is a vertical sectional view schematically illustrating an example of such a seatbelt retractor equipped with a pretensioner. Fig. 9 is a schematic diagram of a commonly known lock mechanism disclosed in, for example, Japanese Patent No. 3192198.

In Fig. 8, reference numeral 1 indicates a seatbelt retractor. Reference numeral 2 indicates a U-shaped frame. Reference numeral 3 indicates a seatbelt. Reference numeral 4 indicates a spool which is rotatably supported between opposite side walls of the U-shaped frame 2 and which retracts the seatbelt 3. Reference numeral 5 indicates a deceleration detecting mechanism (e.g. a vehicle sensor) which is activated when it detects large deceleration of a vehicle occurring in an emergency situation. Reference numeral 6 indicates a lock mechanism which is activated by the vehicle sensor 5 and prevents the spool 4 from rotating in at least the belt-withdrawing direction. Reference numeral 7 indicates a torsion bar (corresponding to an EA mechanism according to the present invention) which is loosely fitted in the center of the spool 4 in the axial direction thereof, and links the spool 4 and the lock mechanism 6 in a rotatable fashion. Reference numeral 8 indicates a spring mechanism having a spiral spring 9 whose spring force constantly biases the spool 4 in the belt-retracting direction via a bush 10. Reference numeral 11 indicates a pretensioner which is activated in an emergency situation and generates a belt-retracting torque (driving force). Reference numeral 12 indicates a bush which transmits the belt-retracting torque of the pretensioner 11 to the spool 4.

Referring to Fig. 9, reference numeral 23 indicates a locking base (corresponding to a locking member according to the present invention) which is rotatable integrally with a second torque transmission shaft 18 of the torsion bar 7. Reference numeral 24 indicates a pawl held by the locking base 23 in an oscillating fashion. Reference numeral 25 indicates a lock gear which is normally rotatable integrally with the locking base 23, but rotates relatively with respect to the locking base 23 in response to the activation of the vehicle sensor 5 in an emergency situation. An outer periphery of the lock gear 25 is provided with ratchet teeth 26. The lock gear 25 has a cam hole 25a for guiding a pin 24b of the pawl 24 in order to allow latching claws 24a of the pawl 24 to engage with internal teeth 27 provided on a side wall of the frame 2. Reference numeral 28 indicates a webbing sensor held by the lock gear 25 in an oscillating fashion and having a latching claw 28a. Reference numeral 29 indicates an inertial ball which is shifted in the forward direction of the vehicle (i.e. in the left direction in Fig. 9) in response to large deceleration occurring in an emergency situation. Reference numeral 30 indicates an actuator having a latching claw 30a at one end thereof. Although some of the components in Fig. 9 should actually be indicated by dotted lines, they are illustrated with solid lines for providing better understanding of the drawing.

In a normal condition of the seatbelt retractor 1, the latching claws 24a of the pawl 24 of the lock mechanism 6 are not engaged with the internal teeth 27 of the frame 2, as shown in Fig. 9. Moreover, the latching claw 28a of the webbing sensor 28 is not engaged with an internal tooth 40a of a retainer 40 shown in Fig. 8. Furthermore, the inertial ball 29 of the vehicle sensor 5 is in a non-activated state, such that the latching claw 30a of the actuator 30 is not engaged with the ratchet teeth 26. When the seatbelt 3 is not worn by a vehicle occupant, the seatbelt 3 is retracted by the spool 4 via the spring mechanism 8 to the fullest extent.

In this state, when the seatbelt 3 is withdrawn at normal speed so as to be worn by the vehicle occupant, the spool 4, the torsion bar 7, the locking base 23, and the lock gear 25 are rotated integrally in the belt-withdrawing direction. Thus, the pawl 24 and the webbing sensor 28 are not activated, such that the latching claws 24a and the latching claw 28a are not engaged with the internal teeth 27. Accordingly, the seatbelt 3 can be withdrawn smoothly and readily.

After the seatbelt 3 is withdrawn to an appropriate length, a tongue (not shown) slidably supported by the seatbelt 3 is fastened to a buckle (not shown) fixed to the vehicle body, whereby the seatbelt 3 is worn by the vehicle occupant. After the tongue is fastened to the buckle, the excess withdrawn portion of the seatbelt 3 is retracted by the spring mechanism 8. As a result, the seatbelt 3 fits onto the vehicle occupant without giving the occupant a feeling of tightness.

In a state where the seatbelt 3 is worn by the vehicle occupant, if large deceleration acts in the forward direction of the vehicle due to, for example, a collision, the pretensioner (PT) 11 is activated in response to the detection of this deceleration, and moreover, the inertial ball 29 of the vehicle sensor 5 is shifted in the forward direction of the vehicle.

Accordingly, the spool 4 rotates in the belt-retracting direction in response to the activation of the pretensioner so as to retract the seatbelt 3. Thus, the seatbelt 3 is prevented from becoming loose and is given a predetermined tension, thereby increasing the restraining force applied to the vehicle occupant.

On the other hand, the shifting of the inertial ball 29 of the vehicle sensor 5 in the forward direction of the vehicle allows the actuator 30 to rotate clockwise in Fig. 9 so that the latching claw 30a becomes engageable to the ratchet teeth 26 of the lock gear 25.

After the belt-retracting operation is performed in response to the activation of the pretensioner 11, the seatbelt 3 is pulled continuously due to an inertia force from the vehicle occupant. For this reason, a torque acts on the spool 4 in the belt-withdrawing direction, such that the spool 4 rotates in that same direction. Thus, the locking base 23 and the lock gear 25 are rotated integrally with the spool 4. In this case, the ratchet teeth 26 immediately engage to the latching claw 30a of the actuator 30 so that the lock gear 25 becomes locked, whereby the lock gear 25 is held back from rotating in the belt-withdrawing direction. However, since the locking base 23 continues to rotate in the belt-withdrawing direction integrally with the spool 4, the locking base 23 rotates relatively with respect to the lock gear 25.

Consequently, the pin 24b of the pawl 24 is guided by the cam hole 25a of the lock gear 25, such that the pawl 24 is rotated clockwise in Fig. 9. This allows the latching claws 24a of the pawl 24 to become engaged to the internal teeth 27 of the frame 2 so that the locking base 23 becomes locked, whereby the locking base 23 is held back from rotating in the belt-withdrawing direction. Accordingly, this also locks a first torque transmission shaft 17 of the torsion bar 7, thereby preventing the first torque transmission shaft 17 from rotating.

However, because the seatbelt 3 is continuously pulled further in response to the inertia force of the vehicle occupant, the spool 4 is biased further in the belt-withdrawing direction. Then, the spool 4 solely rotates relatively with respect to the locking base 23 in the belt-withdrawing direction, whereby the torsion bar 7 becomes twisted via the second torque transmission shaft 18. Subsequently, the spool 4 rotates in the belt-withdrawing direction while twisting the torsion bar 7. The torsional deformation of the torsion bar 7 limits the load applied to the seatbelt 3, whereby an impact applied to the vehicle occupant is absorbed and alleviated.

Since the spool 4 rotates relatively with respect to the locking base 23, a stopper member 16 rotating integrally with the spool 4 rotates relatively with respect to an external-thread shaft portion 15. The stopper member 16 and the external-thread shaft portion 15 are screwed together. Thus, the stopper member 16 is shifted towards the locking base 23. When the stopper member 16 abuts the locking base 23, the stopper member 16 is stopped from rotating any further, whereby the spool 4 is held back from rotating. As a result, the torsion bar 7 stops twisting. Accordingly, the seatbelt 3 is held from being withdrawn so that the vehicle occupant is securely restrained with the seatbelt 3. Moreover, the maximum torsion of the torsion bar 7 is limited so that breakages caused by the torsional deformation of the torsion bar 7 can be prevented.

Furthermore, in this conventional seatbelt retractor 1, when the seatbelt 3 is withdrawn rapidly with respect to the normal speed, the webbing sensor 28 does not respond to such a rapid rotation of the spool 4 in the belt-withdrawing direction (counterclockwise in Fig. 9). In this case, the webbing sensor 28 rotates clockwise in Fig. 9, such that the latching claw 28a engages to the internal tooth 40a. Consequently, as similar to the above, the locking base 23 becomes locked such that the locking base 23 is held back from rotating in the belt-withdrawing direction, and moreover, the first torque transmission shaft 17 of the torsion bar 7 also becomes locked such that the second torque transmission shaft 17 is held back from rotating.

In the conventional seatbelt retractor 1 described above, the vehicle sensor 5 or the webbing sensor 28 is activated in response to an emergency situation or rapid withdrawing of the seatbelt 3 so that the lock gear 25 is stopped from rotating. Moreover, the pawl 24 rotates so that the latching claws 24a thereof become engaged to the internal teeth 27. This locks the locking base 23 such that the locking base 23 is held back from rotating in the belt-withdrawing direction. In this case, the required rotational angle θ for the locking base 23 in the belt-withdrawing direction from the point of such an occurrence of an emergency or rapid withdrawing of the seatbelt 3 (trigger-on state) to the point at which the locking base 23 is locked with respect to the belt-withdrawing direction by the lock mechanism 6 is determined by the sum θ = A + B + C + D. Here, A indicates a turning angle of a sensor, which may be, for example, a rotational angle of the actuator 30 of the vehicle sensor 5 or a rotational angle of the webbing sensor 28. B indicates a pitch of the ratchet teeth 26 of the lock gear 25. C indicates a turning angle of the pawl 24. D indicates a turning angle of the locking base 23. This implies that the required rotational angle θ is large.

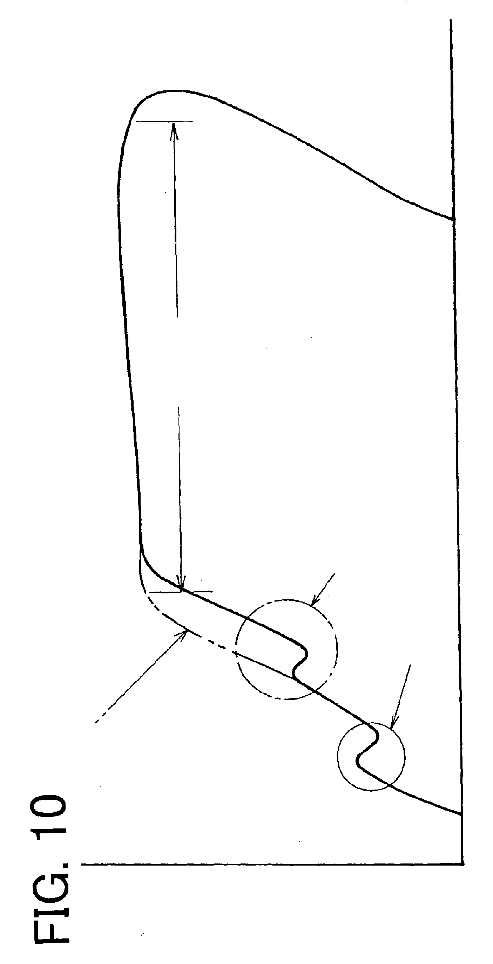

However, if the rotational angle θ for the locking base 23 in the belt-withdrawing direction is large, the rotational angle for the spool 4 in the belt-withdrawing direction is also large, meaning that the length of the seatbelt 3 to be withdrawn from the trigger-on state to the completion of the locked state of the spool 4 with respect to the belt-withdrawing direction becomes large. For this reason, a decline of seatbelt load is produced in the EA operation by the torsion bar 7, as shown with a solid line in Fig. 10.

On the other hand, another type of a seatbelt retractor (for example, see Japanese Patent No. 2610392) is disclosed in which a plurality of first ratchet claws are actuated in response to an activation of the pretensioner in an emergency situation. The actuation of the first ratchet claws allows the spool to rotate in the belt-retracting direction so that the belt-retracting operation is performed. Moreover, when the seatbelt is being withdrawn after the belt-retracting operation is completed by the pretensioner, a plurality of second ratchet claws is actuated when the rotational rate of the spool in the belt-withdrawing direction is sufficiently high. The actuation of the second ratchet claws allows the spool to become locked so that the spool is held back from rotating in the belt-withdrawing direction.

### Problems to be Solved by the Invention

However, in the seatbelt retractor disclosed in Japanese Patent No. 2610392, although it is discussed that the belt-retracting operation is performed by actuating the plurality of first ratchet claws in response to the activation of the pretensioner, the second ratchet claws are actuated to lock the spool with respect to the belt-withdrawing direction only if the spool rotates at a sufficiently high rate in the belt-withdrawing direction when the seatbelt is being withdrawn after the belt-retracting operation is completed by the pretensioner. For this reason, if the rotational rate of the spool in the belt-withdrawing direction is relatively low, the spool cannot be locked with respect to the belt-withdrawing direction.

Furthermore, after the spool begins rotating in the belt-withdrawing direction, the spool is locked only when the rotation of the spool in the belt-withdrawing direction reaches a sufficiently high rate. Consequently, this increases the rotational angle of the spool in the belt-withdrawing direction to the point at which the spool becomes locked. Therefore, similar to the above, a decline of seatbelt load is produced in the EA operation by the torsion bar.

Moreover, due to having the plurality of first ratchet claws and the plurality of second ratchet claws, this conventional example is problematic in view of its complex structure.

In view of the circumstances described above, it is an object of the present invention to provide a simple-structured seatbelt retractor in which the rotational angle of a spool in a belt-withdrawing direction to the point at which the spool becomes locked under an emergency situation is reduced to the utmost extent so as to achieve a good restraining capability for a vehicle occupant, and in which the decline of seatbelt load in EA operation is reduced so that an EA function by an EA mechanism is efficiently and sufficiently achieved. Furthermore, it is another object of the present invention to provide a seatbelt device equipped with such a seatbelt retractor.

### Means for Solving the Problems

According to the invention, these objects are achieved by a seatbelt retractor as defined in claim 1 and a seatbelt device in claim 7. The dependent claims define preferred and advantageous embodiments of the invention.

In order to achieve the abovementioned object, a seatbelt retractor according to the present invention includes a spool which retracts a seatbelt; a locking member which is normally rotatable integrally with the spool; a lock mechanism which is activated under an emergency situation and locks the locking member to prevent the locking member from rotating in a belt-retracting direction; a torsion bar linking the spool and the locking member, the torsion bar normally linking the spool and the locking member in an integrally rotatable manner, the torsion bar being twisted when the locking member is locked by the lock mechanism with respect to the belt-retracting direction; and a pretensioner which is activated under the emergency situation so as to generate a driving force. The seatbelt is retracted with the driving force of the pretensioner in an initial stage of the emergency situation. A load applied to the seatbelt is limited by twisting the torsion bar when the locking member is locked by the lock mechanism with respect to the belt-retracting direction. The locking member is provided with a quick-lock member for locking the spool to prevent the spool from rotating in a belt-withdrawing direction when the spool is rotated rapidly in the belt-retracting direction in response to the activation of the pretensioner.

Furthermore, according to the invention, the quick-lock member may be disposed rotatably in the locking member such that the quick-lock member is engageable to a frame supporting the spool, the engagement between the quick-lock member and the frame locking the spool so as to prevent the spool from rotating in the belt-withdrawing direction.

Furthermore, according to the invention, the quick-lock member may include a quick-lock pawl disposed rotatably in the locking member, the quick-lock pawl being biased constantly towards teeth provided in the frame by a biasing mechanism. Moreover, the locking member may have a stopper disposed in a movable manner. The stopper maintains the quick-lock pawl in a position where the quick-lock pawl is not engaged to the teeth of the frame. The stopper is shifted when the spool is rotated rapidly in the belt-retracting direction in response to the activation of the pretensioner so as to allow the quick-lock pawl to engage with the teeth of the frame.

Furthermore, according to a first aspect of the present invention, the quick-lock member may include at least one quick-lock pawl disposed rotatably in the locking member, at least one quick-lock pawl being biased constantly towards teeth provided in the frame by at least one biasing mechanism. The locking member may have at least one elastically deformable stopper which maintains at least one quick-lock pawl in a position where at least one quick-lock pawl is not engaged to the teeth of the frame. In this case, a centrifugal force generated when the spool is rotated rapidly in the belt-retracting direction in response to the activation of the pretensioner allows at least one stopper to become elastically deformed so that at least one quick-lock pawl is rotated and is released from at least one stopper, at least one quick-lock pawl being shifted to a position where at least one quick-lock pawl is engageable to the teeth of the frame.

Furthermore, according to a second aspect of the present invention, at least one quick-lock pawl, at least one biasing mechanism, and at least one stopper may respectively include a pair of quick-lock pawls, a pair of biasing mechanism, and a pair of stoppers, such that two sets of the quick-lock pawls, the biasing mechanism, and the stoppers are provided, each set including one quick-lock pawl, one biasing mechanism, and one stopper. In this case, an engagement position of the quick-lock pawl of the first set with respect to the teeth of the frame and an engagement position of the quick-lock pawl of the second set with respect to the teeth of the frame are not in phase with each other by half the pitch or about half the pitch of the teeth of the frame.

Furthermore, according to a third aspect of the present invention, at least one quick-lock pawl may include a plurality of latching claws, the latching claws forming a predetermined number of sets such that the latching claws in each set are engageable together to the teeth of the frame, the latching claws being arranged such that engagement positions between the sets of the latching claws with respect to the teeth of the frame are not in phase with each other by half the pitch or about half the pitch of the teeth of the frame.

Furthermore, a seatbelt device according to the present invention includes the seatbelt retractor described above, the seatbelt retractor retracting a seatbelt; a tongue slidably supported by the seatbelt withdrawn from the seatbelt retractor; and a buckle engageable to and releasable from the tongue. The seatbelt retractor prevents the seatbelt from being withdrawn under an emergency situation in order to restrain a vehicle occupant.

### Advantages

According to the seatbelt retractor and the seatbelt device equipped with the seatbelt retractor of the present invention, when the spool is rotated rapidly in response to the activation of the pretensioner in an emergency situation, the quick-lock member is correspondingly activated so as to quickly lock the spool with respect to the rotation in the belt-withdrawing direction before the locking member is locked with respect to the rotation in the belt-withdrawing direction by the lock mechanism. Thus, the rotational angle of the spool in the belt-withdrawing direction can be held back to the utmost extent until the spool becomes locked with respect to the rotation in the belt-withdrawing direction. Consequently, the vehicle occupant can be restrained sufficiently with the seatbelt, and moreover, the decline of seatbelt load in the EA operation by the torsion bar can be reduced, whereby the EA function by the torsion bar can be efficiently and sufficiently achieved.

In particular, according to the first aspect of the present invention, since the quick-lock pawl elastically held by the elastically deformable stopper rotates towards its active position with its own centrifugal force, the seatbelt retractor achieves reliable operation with a more simplified structure. Moreover, since the quick-lock pawl is constantly biased by an engagement-maintaining member in a direction in which the quick-lock pawl engages to the teeth of the frame, the quick-lock pawl is prevented from moving back to its original position even when the quick-lock pawl abuts on the tip of one of the teeth of the frame. Accordingly, this ensures the engagement between the quick-lock pawl and the teeth of the frame after the activation of the pretensioner.

Furthermore, according to the second aspect of the present invention, two quick-lock pawls are provided so that one of the quick-lock pawls can quickly engage to the teeth of the frame. Thus, the spool can be locked more quickly with respect to the belt-withdrawing direction after the activation of the pretensioner. Consequently, the withdrawing operation of the seatbelt after the activation of the pretensioner is restricted, whereby the vehicle occupant can be restrained more effectively with the seatbelt.

Furthermore, according to the third aspect of the present invention, the quick-lock pawl includes a predetermined number of sets of the latching claws, and the latching claws in each set are engageable together to the teeth of the frame. Thus, one of the sets of the latching claws can quickly engage to the teeth of the frame, whereby the spool can be locked more quickly with respect to the rotation in the belt-withdrawing direction after the activation of the pretensioner. Consequently, the withdrawing operation of the seatbelt after the activation of the pretensioner is restricted, whereby the vehicle occupant can be restrained more effectively with the seatbelt.

### Brief Description of the Drawings

Fig. 1 schematically and partially illustrates a seatbelt retractor according to a first embodiment of the present invention.
Fig. 2 illustrates the operation of the seatbelt retractor according to the first embodiment shown in Fig. 1, and includes a diagram (a) showing a non-activated state of a quick-lock pawl and a diagram (b) showing an activated state of the quick-lock pawl.
Fig. 3 illustrates a seatbelt retractor according to a second embodiment of the present invention, and includes a diagram (a) showing a non-activated state of the quick-lock pawl and a diagram (b) showing an activated state of the quick-lock pawl.
Fig. 4 schematically illustrates an example of a seatbelt device equipped with the seatbelt retractor according to the present invention.
Fig. 5 illustrates a seatbelt retractor according to a third embodiment of the present invention, and includes a diagram (a) showing a non-activated state of the quick-lock pawl and a diagram (b) showing an activated state of the quick-lock pawl.
Fig. 6 illustrates a seatbelt retractor according to a fourth embodiment of the present invention, and includes a diagram (a) showing a non-activated state of quick-lock pawls and diagrams (b) and (c) showing an activated state of the quick-lock pawls.
Fig. 7 illustrates a seatbelt retractor according to a fifth embodiment of the present invention, and includes a diagram (a) showing a non-activated state of the quick-lock pawl and diagrams (b) and (c) showing an activated state of the quick-lock pawl.
Fig. 8 is a vertical sectional view schematically illustrating an example of a conventional seatbelt retractor equipped with a pretensioner and an EA mechanism.
Fig. 9 is a schematic diagram illustrating a state in which a component, such as a cover, is removed from the seatbelt retractor shown in Fig. 8, and is viewed from a direction indicated by an arrow IX in Fig. 8.
Fig. 10 illustrates the dynamic characteristics (stroke versus seatbelt-load characteristics) of the seatbelt retractor according to the present invention and the seatbelt retractor of the conventional example.

### Best Mode for Carrying Out the Invention

Embodiments of the present invention will now be described with reference to the drawings.

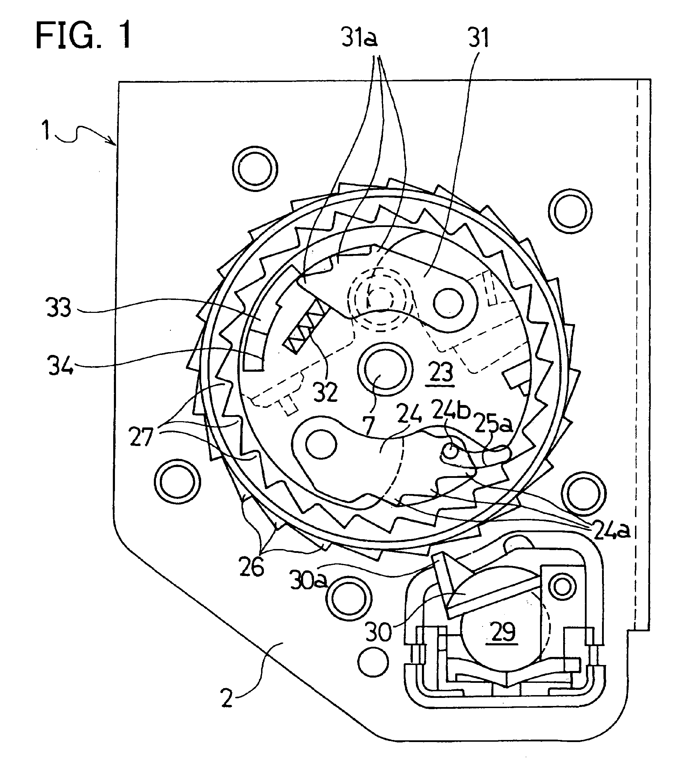

Fig. 1 schematically and partially illustrates a seatbelt retractor according to a first embodiment of the present invention. Fig. 1 corresponds to Fig. 9. In each of the embodiments below, the components that are the same as those in the prior embodiment or in the conventional example shown in Figs. 8 and 9 are given the same reference numerals, and detailed descriptions of those components will be omitted.

Referring to Fig. 1, in a seatbelt retractor 1 according to the first embodiment of the present invention, the locking base 23 is not provided with a webbing sensor (the webbing sensor 28 is indicated by a dotted line in Fig. 1 for descriptive purposes). On the other hand, the locking base 23 is provided with a quick-lock pawl 31, which is disposed in a rotatable manner and is activated in an emergency situation. Similar to the conventional example, the webbing sensor 28 is provided on the lock gear 25, and the latching claw 28a of the webbing sensor 28 is engageable to the internal tooth 40a.

One end of the quick-lock pawl 31 is provided with a plurality of latching claws 31a (three claws in the drawing) engageable to the internal teeth 27. Moreover, the quick-lock pawl 31 and the locking base 23 have a spring 32 disposed therebetween. Due to a biasing force of the spring 32, the quick-lock pawl 31 is constantly biased in the clockwise direction in Fig. 1, or in other words, in the direction in which the latching claws 31a engage to the internal teeth 27.

Furthermore, the locking base 23 is also provided with an arc-shaped stopper 33 formed of a plate-like material. The stopper 33 is slidably engaged to an arc-shaped guide groove 34, which is provided in the locking base 23 and is centered on the rotary shaft of the spool 4. The stopper 33 and the guide groove 34 have a predetermined frictional force therebetween. Normally, the stopper 33 is maintained at an initial position where a step portion of the stopper 33 abuts on a step portion of the guide groove 34, as shown in Fig. 1. In this initial position of the stopper 33, one end of the stopper 33 projected from the guide groove 34 abuts on one of the latching claws 31a of the quick-lock pawl 31, such that all of the latching claws 31a are positionally maintained in a non-engaged state with respect to the internal teeth 27. Alternatively, the end of the stopper 33 may abut on two or more latching claws 31a.

When the spool 4 is rotated rapidly in the belt-retracting direction in response to the activation of the pretensioner 11, the stopper 33 does not respond to the rotation of the locking base 23 in the belt-retracting direction. Instead, the stopper 33 moves (rotates) along the guide groove 34 against the frictional force with respect to the guide groove 34 until the stopper 33 abuts on a base portion of the guide groove 34.

Other configurations of the seatbelt retractor 1 according to the first embodiment are the same as those of the seatbelt retractor 1 of the conventional example shown in Figs. 8 and 9.

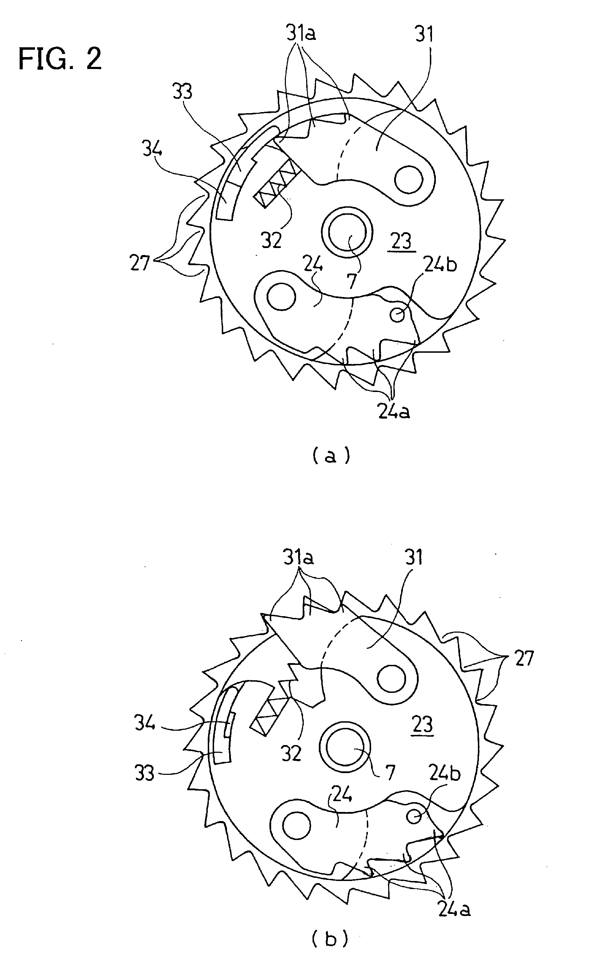

Similar to the conventional example, in the seatbelt retractor 1 according to the first embodiment, when the seatbelt 3 is being withdrawn or retracted under normal condition, the spool 4 and the locking base 23 rotate together at normal speed. Thus, the stopper 33 does not move and is maintained at its initial position as shown in Fig. 2(a). Accordingly, due to the stopper 33, the quick-lock pawl 31 is also maintained at a non-active position where the latching claws 31a are not engaged with the internal teeth 27.

Similarly, since the pretensioner 11 is not activated in response to a small collision of the vehicle (for example, about 1.5 G) or rapid withdrawing of the seatbelt 3, the stopper 33 does not move and is maintained at its initial position as shown in Fig. 2(a). Accordingly, due to the stopper 33, the quick-lock pawl 31 is also maintained at the non-active position where the latching claws 31a are not engaged with the internal teeth 27.

On the other hand, in case of an emergency situation such as a large collision where the vehicle decelerates significantly, the pretensioner 11 is activated so that the spool 4 and the locking base 23 are quickly rotated together in the belt-retracting direction. Subsequently, without responding to the quick rotation of the locking base 23 in the belt-retracting direction, the stopper 33 is guided by the guide groove 34 as shown in Fig. 2(b) so as to move (rotate) counterclockwise relatively with respect to the locking base 23. As a result, the stopper 33 reaches an active position where the stopper 33 abuts on the base portion of the guide groove 34. Accordingly, the stopper 33 is shifted away from the latching claws 31a, and the quick-lock pawl 31 is rotated clockwise due to the biasing force of the spring 32, whereby the latching claws 31a become engaged to the internal teeth 27. This locks the locking base 23 so that the locking base 23 is held back from rotating in the belt-withdrawing direction, and the EA operation by the torsion bar 7 is quickly performed.

In this case, as shown in Fig. 2(b), the latching claws 24a of the pawl 24 are not engaged to the internal teeth 27 since the spool 4 has not yet reached the rotational angle θ in response to the activation of the vehicle sensor 5. Accordingly, in the seatbelt retractor 1 according to the first embodiment, the locking base 23 is locked and held back from rotating in the belt-withdrawing direction under an emergency situation much more quickly than in the conventional example in which the locking of the locking base 23 with respect to the belt-withdrawing direction is achieved by the pawl 24.

According to the seatbelt retractor 1 of the first embodiment, before the latching claws 24a of the pawl 24 engage to the internal teeth 27, the quick-lock pawl 31 is engaged to the internal teeth 27 by responding to the rapid rotation of the spool 4 in response to the activation of the pretensioner 11 in an emergency situation. For this reason, in case of an emergency situation, the spool 4 can be locked quickly, and the rotational angle of the spool 4 in the belt-withdrawing direction can be held back to the utmost extent until the spool 4 becomes locked. Thus, the vehicle occupant can be restrained sufficiently with the seatbelt 3. Moreover, as indicated by a double-dashed line in Fig. 10, the decline of seatbelt load in an EA range in which the torsion bar 7 performs the EA operation can be reduced, whereby the EA function by the torsion bar 7 can be efficiently and sufficiently achieved.

Other advantages of the seatbelt retractor 1 according to the first embodiment are the same as those of the seatbelt retractor 1 of the conventional example shown in Figs. 8 and 9.

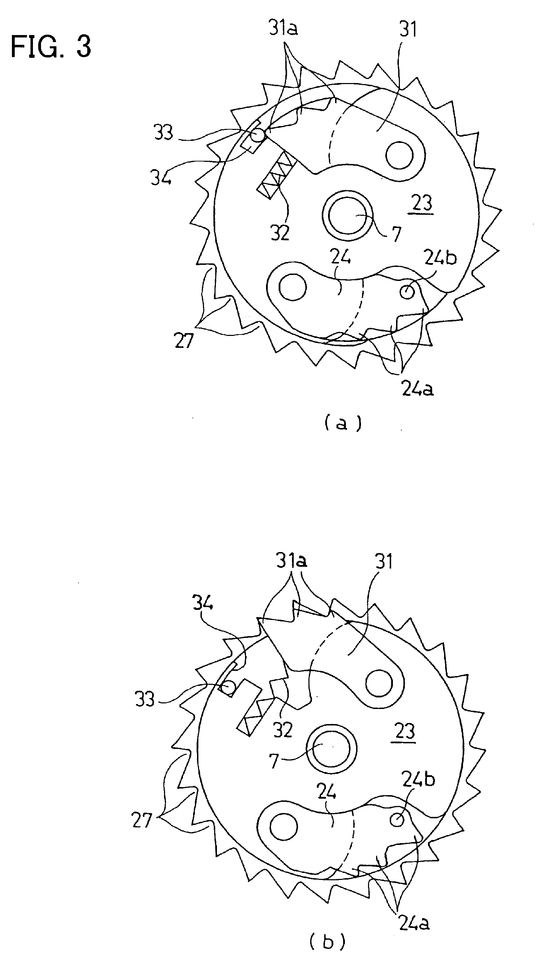

Fig. 3 includes diagrams illustrating a seatbelt retractor according to a second embodiment of the present invention. Fig. 3(a) corresponds to Fig. 2(a), and Fig. 3(b) corresponds to Fig. 2(b).

In contrast to the first embodiment shown in Fig. 1 in which the stopper 33 is formed of an arc-shaped plate-like material, the stopper 33 in the seatbelt retractor 1 according to the second embodiment shown in Figs. 3(a) and 3(b) is formed of a pin-like material or a ball-like material. Consequently, in the seatbelt retractor 1 according to the second embodiment, the stopper 33 is given a simpler shape and can be manufactured at a lower cost.

Other configurations and advantages of the seatbelt retractor 1 according to the second embodiment are the same as those of the seatbelt retractor 1 according to the first embodiment shown in Fig. 1 and the seatbelt retractor 1 of the conventional example shown in Figs. 8 and 9.

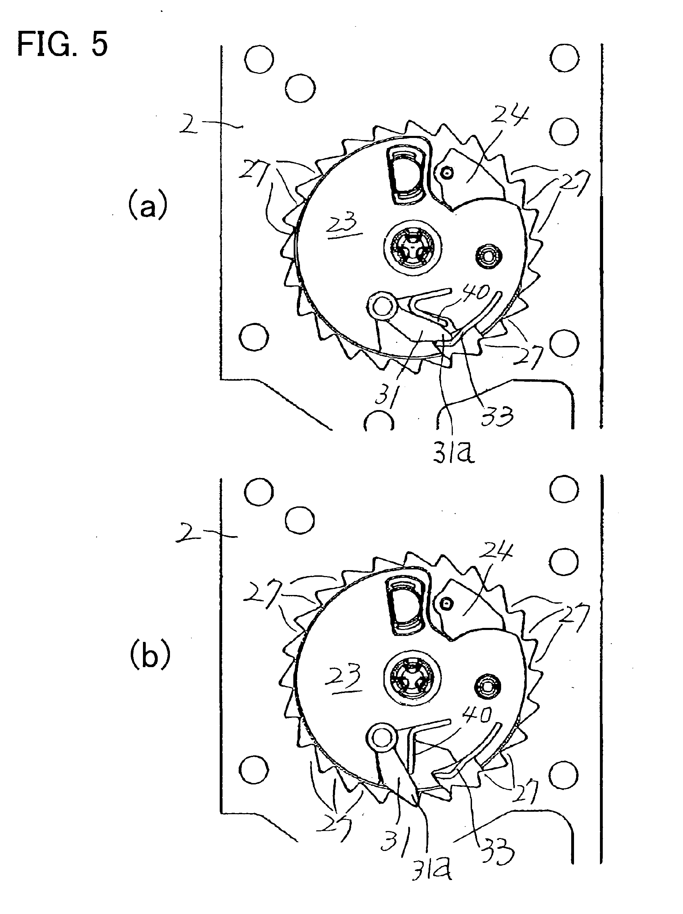

Fig. 5 includes diagrams illustrating a seatbelt retractor according to a third embodiment of the present invention. Fig. 5(a) corresponds to Fig. 2(a), and Fig. 5(b) corresponds to Fig. 2(b).

As described above, in the first and second embodiments shown in Figs. 1 and 3, the quick-lock pawl 31 is maintained at a non-active position by the stopper 33, and the stopper 33 is rotated relatively with respect to the locking base 23 when the locking base 23 rotates rapidly in the belt-retracting direction in response to the activation of the pretensioner 11. The stopper 33 thus becomes disengaged from the quick-lock pawl 31, whereby the quick-lock pawl 31 is rotated by the biasing force of the spring 32 so as to become engaged to the internal teeth 27 of the frame 2. On the other hand, in the seatbelt retractor 1 according to the third embodiment, the quick-lock pawl 31 is rotated to its active position with a centrifugal force generated by the rapid rotation of the locking base 23 in the belt-retracting direction in response to the activation of the pretensioner 11.

Specifically, referring to Figs. 5(a) and 5(b), the quick-lock pawl 31 is set in a manner such that its center of mass is disposed eccentrically with respect to a rotary shaft of the quick-lock pawl 31. When a centrifugal force is generated in response to the rotation of the locking base 23, the quick-lock pawl 31 rotates outward around its rotary shaft (i.e. in a direction in which the quick-lock pawl 31 engages with the internal teeth 27). The quick-lock pawl 31 has only one latching claw 31a.

In a normal condition, the quick-lock pawl 31 is maintained at a non-active position by the stopper 33 formed of a curved leaf spring, and moreover, is constantly biased outward by an engagement-maintaining member 40 formed of a leaf spring bent into an L-shape.

Other configurations of the seatbelt retractor 1 according to the third embodiment are the same as those of the first embodiment shown in Fig. 1.

According to the seatbelt retractor 1, when the pretensioner 11 is in a non-activated state, even if a centrifugal force is generated, the quick-lock pawl 31 is maintained at its non-active position by the stopper 33, as shown in Fig. 5(a), and is not engaged to the internal teeth 27 since such a centrifugal force is small. On the other hand, when a large centrifugal force acts on the quick-lock pawl 31 due to the rapid rotation of the locking base 23 in the belt-retracting direction in response to the activation of the pretensioner 11, the force that tries to rotate the quick-lock pawl 31 outward overcomes the maintaining force of the stopper 33. Therefore, the stopper 33 is subject to elastic deformation due to the rotational force of the quick-lock pawl 31, whereby the quick-lock pawl 31 is released from the stopper 33. Subsequently, the quick-lock pawl 31 rotates outward so as to move to an active position where the quick-lock pawl 31 is engageable to the internal teeth 27. In this case, because the quick-lock pawl 31 is constantly biased by the engagement-maintaining member 40 in the direction in which the quick-lock pawl 31 engages to the internal teeth 27, the quick-lock pawl 31 is restricted from moving back to its original position (i.e. the non-active position) when the quick-lock pawl 31 abuts on the tip of one of the internal teeth 27.

In the seatbelt retractor 1 according to the third embodiment, the quick-lock pawl 31 elastically held by the stopper 33 formed of a leaf spring rotates toward its active position with its own centrifugal force. Thus, the seatbelt retractor 1 according to the third embodiment achieves reliable operation with a more simplified structure. Moreover, since the quick-lock pawl 31 is constantly biased by the engagement-maintaining member 40 formed of a leaf spring in the direction in which the quick-lock pawl 31 engages to the internal teeth 27, the quick-lock pawl 31 is prevented from moving back to its original position even when the quick-lock pawl 31 abuts on the tip of one of the internal teeth 27. Accordingly, this ensures the engagement between the quick-lock pawl 31 and the internal teeth 27 after the activation of the pretensioner 11.

Other advantages of the seatbelt retractor 1 according to the third embodiment are the same as those of the first embodiment shown in Fig. 1.

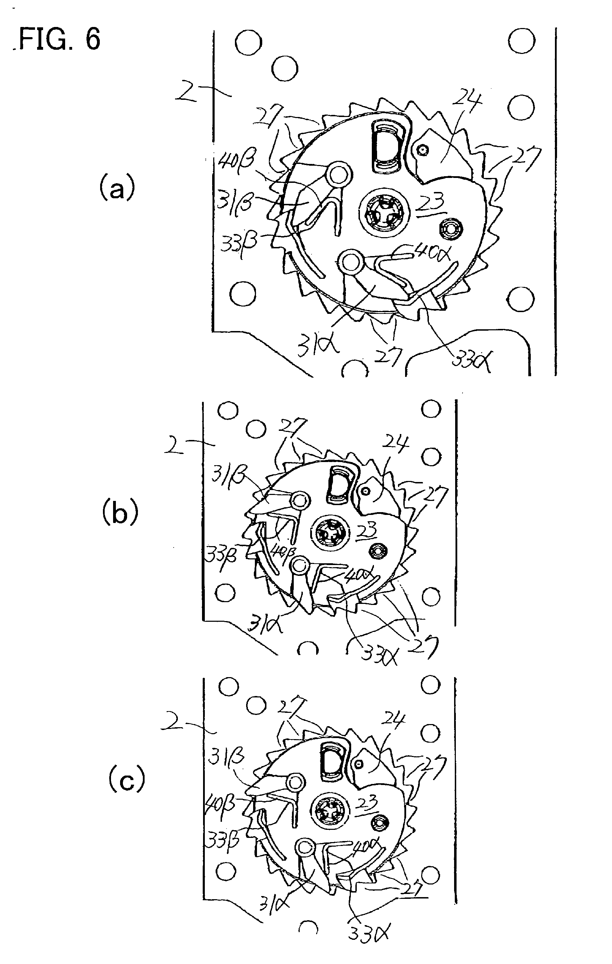

Fig. 6 includes diagrams illustrating a seatbelt retractor according to a fourth embodiment of the present invention. Fig. 6(a) illustrates a non-activated state of the quick-lock pawl, and Figs. 6(b) and 6(c) illustrate an activated state of the quick-lock pawl.

As described above, in the third embodiment shown in Figs. 5(a) and 5(b), there is provided only one set of the quick-lock pawl 31, the stopper 33 which is formed of a leaf spring and elastically maintains the quick-lock pawl 31 in a non-active position, and the engagement-maintaining member 40 which is formed of a leaf spring and constantly biases the quick-lock pawl 31 in the direction in which the quick-lock pawl 31 engages to the internal teeth 27. On the other hand, referring to Fig. 6(a), in the seatbelt retractor 1 according to the fourth embodiment, there are provided two sets of quick-lock pawls 31, stoppers 33, and engagement-maintaining members 40, which are exactly the same as those included in the third embodiment shown in Figs. 5(a) and 5(b). In this specification and the drawings, reference symbols α and β are given to the reference numerals of the corresponding components for descriptive purposes.

The engagement position of one of the quick-lock pawls 31α with respect to the internal teeth 27 and the engagement position of the other quick-lock pawl 31β with respect to the internal teeth 27 are not in phase with each other by half the pitch or about half the pitch of the internal teeth 27.

In the seatbelt retractor 1 according to the fourth embodiment, since the engagement positions of the quick-lock pawls 31α, 31β with respect to the internal teeth 27 are not in phase with each other by half the pitch or about half the pitch of the internal teeth 27, when the quick-lock pawl 31α engages to the internal teeth 27 first, as shown in Fig. 6(b), the quick-lock pawl 31β does not engage to the internal teeth 27. Likewise, referring to Fig. 6(c), when the quick-lock pawl 31β engages to the internal teeth 27 first, the quick-lock pawl 31α does not engage to the internal teeth 27.

Accordingly, by providing two quick-lock pawls 31α, 31β, one of the quick-lock pawls 31α, 31β, can quickly engage to the internal teeth 27, whereby the spool can be locked more quickly with respect to the belt-withdrawing direction after the activation of the pretensioner 11. Consequently, the withdrawing operation of the seatbelt 3 after the activation of the pretensioner 11 is restricted, whereby the vehicle occupant can be restrained more effectively with the seatbelt 3.

Other configurations and advantages of the seatbelt retractor 1 according to the fourth embodiment are the same as those of the first embodiment shown in Fig. 1.

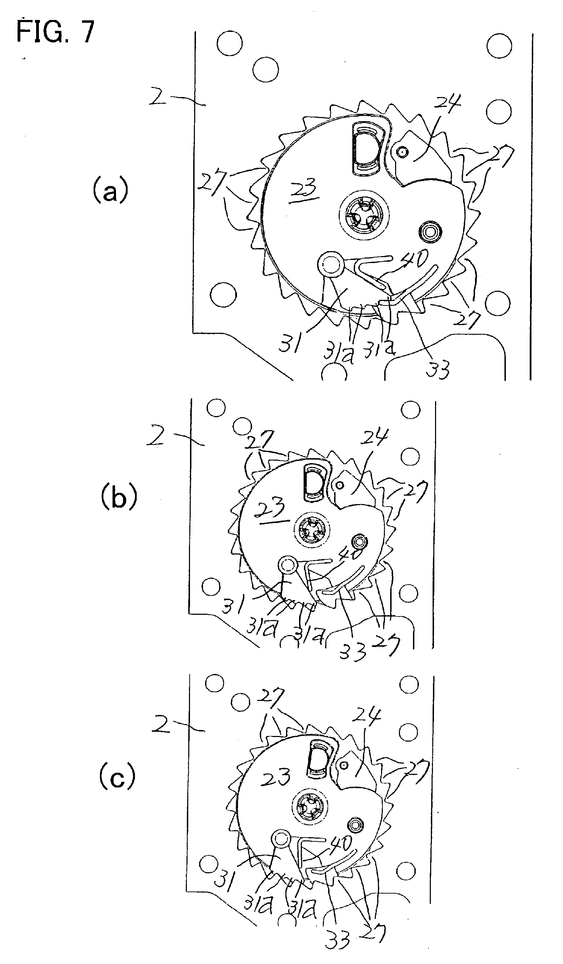

Fig. 7 includes diagrams illustrating a seatbelt retractor according to a fifth embodiment of the present invention. Fig. 7(a) illustrates a non-activated state of the quick-lock pawl, and Figs. 7(b) and 7(c) illustrate an activated state of the quick-lock pawl.

In contrast to the third embodiment shown in Figs. 5(a) and 5(b) in which the quick-lock pawl 31 is provided with only one latching claw 31a, the quick-lock pawl 31 in the seatbelt retractor 1 according to the fifth embodiment is provided with four latching claws 31a, as shown in Fig. 7(a). In this case, a first latching claw 31a and a third latching claw 31a form a pair and engage together to the internal teeth 27, whereas a second latching claw 31a and a fourth latching claw 31a form another pair and engage together to the internal teeth 27.

The engagement position of the first latching claw 31a and the third latching claw 31a of the first pair with respect to the internal teeth 27 and the engagement position of the second latching claw 31a and the fourth latching claw 31a of the second pair with respect to the internal teeth 27 are not in phase with each other by half the pitch or about half the pitch of the internal teeth 27.

In the seatbelt retractor 1 according to the fifth embodiment, since the engagement positions of the two pairs of the latching claws 31a with respect to the internal teeth 27 are not in phase with each other by half the pitch or about half the pitch of the internal teeth 27, when the first latching claw 31a and the third latching claw 31a of the first pair engage to the internal teeth 27, as shown in Fig. 7(b), the second latching claw 31a and the fourth latching claw 31a of the second pair do not engage to the internal teeth 27. Likewise, referring to Fig. 7(c), when the second latching claw 31a and the fourth latching claw 31a of the second pair engage to the internal teeth 27, the first latching claw 31a and the third latching claw 31a of the first pair do not engage to the internal teeth 27.

Accordingly, by providing two pairs of latching claws 31a in a single quick-lock pawl 31, one of the pairs of the latching claws 31a can quickly engage to the internal teeth 27, whereby the spool can be locked more quickly with respect to the belt-withdrawing direction after the activation of the pretensioner 11. Consequently, the withdrawing operation of the seatbelt 3 after the activation of the pretensioner 11 is restricted, whereby the vehicle occupant can be restrained more effectively with the seatbelt 3.

Other configurations and advantages of the seatbelt retractor 1 according to the fifth embodiment are the same as those of the third embodiment shown in Figs. 5(a) and 5 (b).

Alternatively, the number of the latching claws 31a is not limited to four, and may be two or more. In that case, the latching claws 31a may form a predetermined number of sets such that the latching claws 31a in each set are engageable together to the internal teeth 27. Moreover, the latching claws 31a may be arranged such that the engagement positions between the given sets of the latching claws 31a with respect to the internal teeth 27 are not in phase with each other.

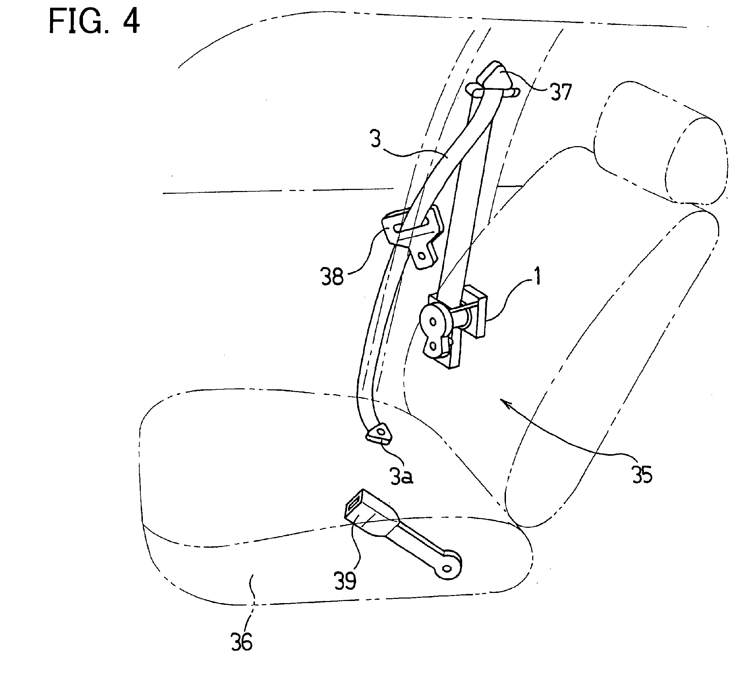

The seatbelt retractor 1 according to each of the above embodiments is applicable to a seatbelt retractor 1 used in a conventional seatbelt device. Fig. 4 illustrates an example of a seatbelt device 35 to which the seatbelt retractor 1 according to each of the above embodiments can be applied. The seatbelt device 35 includes the seatbelt retractor 1 fixed to a vehicle body; the seatbelt 3 withdrawn from the seatbelt retractor 1 and having a belt anchor 3a at its end, the belt anchor 3a being fixed to the floor of the vehicle or to a vehicle seat 36; a guide anchor 37 for guiding the seatbelt 3 withdrawn from the seatbelt retractor 1 towards the vehicle occupant's shoulders; a tongue 38 which is slidably supported by the seatbelt 3 guided by the guide anchor 37; and a buckle 39 which is fixed to the floor of the vehicle body or to the vehicle seat and is engageable to releasable from the tongue 38.

### Industrial Applicability

The seatbelt retractor and the seatbelt device equipped with the seatbelt retractor according to the present invention are used for restraining and protecting a vehicle occupant with a seatbelt. The seatbelt retractor and the seatbelt device equipped with the seatbelt retractor are provided with a pretensioner, which increases the restraining force applied to the vehicle occupant from the seatbelt by rotating a spool in a belt-withdrawing direction in an initial stage of an emergency situation.

## Claims

1. A seatbelt retractor comprising:
a spool (4) which retracts a seatbelt (3);
a locking member (23) which is normally rotatable integrally with the spool;
a lock mechanism (6) which is activated under an emergency situation and locks the locking member (23) to prevent the locking member (23) from rotating in a belt-retracting direction;
a torsion bar (7) linking the spool (4) and the locking member (23), the torsion bar (7) normally linking the spool (4) and the locking member (23) in an integrally rotatable manner, the torsion bar (7) being twisted when the locking member (23) is locked by the lock mechanism (6) with respect to the belt-retracting direction; and
a pretensioner (11) which is activated under the emergency situation so as to generate a driving force,
wherein the seatbelt (3) is retracted with the driving force of the pretensioner (11) in an initial stage of the emergency situation,
wherein a load applied to the seatbelt (3) is limited by twisting the torsion bar (7) when the locking member (23) is locked by the lock mechanism (6) with respect to the belt-retracting direction, and
wherein the locking member (23) is provided with a quick-lock member (31) for locking the spool (4) to prevent the spool (4) from rotating in a belt-withdrawing direction when the spool (4) is rotated rapidly in the belt-retracting direction in response to the activation of the pretensioner (11).

2. The seatbelt retractor according to Claim 1, wherein the quick-lock member (31) is disposed rotatably in the locking member(23) such that the quick-lock member (31) is engageable to a frame (2) supporting the spool (4), the engagement between the quick-lock member (31) and the frame (2) locking the spool (4) so as to prevent the spool (4) from rotating in the belt-withdrawing direction.

3. The seatbelt retractor according to Claim 2, wherein the quick-lock member comprises a quick-lock pawl (31) disposed rotatably in the locking member (23), the quick-lock pawl (31) being biased constantly towards teeth (27) provided in the frame (2) by a biasing mechanism (32), wherein the locking member (23) has a stopper (33) disposed in a movable manner, the stopper (33) maintaining the quick-lock pawl (31) in a position where the quick-lock pawl (31) is not engaged to the teeth (27) of the frame (2), and
wherein the stopper (33) is shifted when the spool (4) is rotated rapidly in the belt-retracting direction in response to the activation of the pretensioner (11) so as to allow the quick-lock pawl (31) to engage with the teeth (27) of the frame (2).

4. The seatbelt retractor according to Claim 2, wherein the quick-lock member comprises at least one quick-lock pawl (31) disposed rotatably in the locking member (23), said at least one quick-lock pawl (31) being biased constantly towards teeth (27) provided in the frame (2) by at least one biasing mechanism (40), wherein the locking member (23) has at least one elastically deformable stopper (33) which maintains said at least one quick-lock pawl (31) in a position where said at least one quick-lock pawl (31) is not engaged to the teeth (27) of the frame (2), and
wherein a centrifugal force generated when the spool (4) is rotated rapidly in the belt-retracting direction in response to the activation of the pretensioner (11) allows said at least one stopper (33) to become elastically deformed so that said at least one quick-lock pawl (31) is rotated and is released from said at least one stopper, said at least one quick-lock pawl (31) being shifted to a position where said at least one quick-lock pawl (31) is engageable to the teeth (27) of the frame (2).

5. The seatbelt retractor according to Claim 4, wherein said at least one quick-lock pawl (31), said at least one biasing mechanism (40), and said at least one stopper (33) respectively comprise a pair of quick-lock pawls (31α, 31β), a pair of biasing mechanism (40α, 40β), and a pair of stoppers (33α, 33β), such that two sets of the quick-lock pawls (31α, 31β), the biasing mechanism (40α, 40β), and the stoppers (33α, 33β) are provided, each set including one quick-lock pawl (31α, 31β), one biasing mechanism (40α, 40β), and one stopper (33α, 33β), and
wherein an engagement position of the quick-lock pawl (31α) of the first set with respect to the teeth (27) of the frame (2) and an engagement position of the quick-lock pawl (31β) of the second set with respect to the teeth (27) of the frame (2) are not in phase with each other by half the pitch or about half the pitch of the teeth (27) of the frame (2).

6. The seatbelt retractor according to Claim 4, wherein said at least one quick-lock pawl (31) includes a plurality of latching claws (31a), the latching claws (31a) forming a predetermined number of sets such that the latching claws (31a) in each set are engageable together to the teeth (27) of the frame (2), the latching claws (31a) being arranged such that engagement positions between the sets of the latching claws (31a) with respect to the teeth (27) of the frame (2) are not in phase with each other by half the pitch or about half the pitch of the teeth (27) of the frame (2).

7. A seatbelt device comprising:
the seatbelt retractor (1) according to any one of Claims 1 to 6, the seatbelt retractor (1) retracting a seatbelt (3);
a tongue (38) slidably supported by the seatbelt (3) withdrawn from the seatbelt retractor (1); and
a buckle (39) engageable to and releasable from the tongue (38),
wherein the seatbelt retractor (1) prevents the seatbelt (3) from being withdrawn under an emergency situation in order to restrain a vehicle occupant.
